# EUROPEAN PATENT SPECIFICATION

(11) **EP 1 075 374 B1**
(45) Date of publication and mention of the grant of the patent: **19.11.2003**
(21) Application number: 99918773.5
(22) Date of filing: 22.04.1999
(51) Int. Cl.: B29C 45/13, B29C 45/16

(54) **APPARATUS FOR SUBSTANTIALLY SIMULTANEOUSLY FORMING MULTIPLE ARTICLES HAVING DIFFERENT PROPERTIES**
VORRICHTUNG ZUM HAUPTSÄCHLICH GLEICHZEITIGEN FORMEN VON MEHREREN GEGENSTÄNDEN MIT VERSCHIEDENEN EIGENSCHAFTEN
APPAREIL POUR FORMER DE MANIERE SENSIBLEMENT SIMULTANEE DE MULTIPLES ARTICLES AYANT DIFFERENTES PROPRIETES

(30) Priority: 28.04.1998 US 67328; 16.04.1999 US 293262
(43) Date of publication of application: 14.02.2001
(60) Divisional application: 03019283.5
(73) Proprietor: GILLETTE CANADA COMPANY, Mississauga, Ontario L4Z 4C5 (CA)
(72) Inventor: CONNOLLY, Declan, County Kildare (IE); FRYAUF, Michael, F., West Branch, IA 52358 (US); MCCONNELL, Mark, Naas, County Kildare (IE); SZCZECH, Gerald, S., Iowa City, IA 52246 (US)
(74) Representative: Ebner von Eschenbach, Jennifer
(86) International application number: US9908818
(87) International publication number: WO99055514

(56) References cited:
- EP-A- 0 673 741
- DE-A- 19 542 102
- DE-A- 19 728 733
- GB-A- 2 276 580
- PATENT ABSTRACTS OF JAPAN vol. 13, no. 60 (M-796), 10 February 1989 (1989-02-10) -& JP 63 265611 A (TOSHIBA MACH CO LTD), 2 November 1988 (1988-11-02)
- PATENT ABSTRACTS OF JAPAN vol. 14, no. 420 (M-1023), 11 September 1990 (1990-09-11) -& JP 02 165923 A (NISSAN MOTOR CO LTD), 26 June 1990 (1990-06-26)
- PATENT ABSTRACTS OF JAPAN vol. 98, no. 5, 30 April 1998 (1998-04-30) & JP 10 006363 A (SUNSTAR INC), 13 January 1998 (1998-01-13)

## Description

The invention relates to forming articles, and in particular to forming toothbrush bodies.

Toothbrushes generally include a toothbrush body that includes a handle portion and a head portion, and tufts of bristles located at or near the head portion.

Toothbrush bodies are generally made by injection molding machines. These toothbrush bodies often consist of plastic and include multiple components. The different components may differ in nature, color, texture, density, and hardness. For example, toothbrush bodies may include a relatively hard plastic base component and a colored rubberized gripping component.

After the toothbrush bodies are manufactured they are automatically removed from the molding machine and deposited onto a cooling conveyor. The cooling conveyor transports the toothbrush bodies to a bin. The bodies are then manually transported to a bristle tufting machine where they receive tufts of bristles and are formed into toothbrushes.

The tufting operation generally involves manually grabbing handfuls of differently colored toothbrush bodies so as to provide a mixture of differently colored toothbrush bodies to a hopper. A conveyor removes the toothbrush bodies randomly from the hopper and orients the bodies so that the head portion of the body is available to receive the tufts of bristles from the bristle tufting machine. The bristle tufting machine automatically staples tufts of bristles into the head of each toothbrush body to form a toothbrush. The finished toothbrushes are automatically deposited into a tray which is manually transported to a packaging machine.

Typical injection molding machines include those disclosed in Patent Abstracts of Japan, vol. 13, no. 60, 10 February 1989 and JP 63 265 611 (Toshiba Mach. Co. Ltd) 2 November 1988; Patent Abstracts of Japan vol. 14 no. 420, 11 September 1990 and JP 02 165923 (Nissan Motor Co. Ltd) 26 June 1990; DE 197 28 733; GB 2 276 580; Patent Abstracts of Japan vol. 98, no. 5, 30 April 1998 and JP 10 006 363 (Sunstar Inc) 13 January 1998; EP 673 741; and DE 195 42 102.

As used herein, the term "toothbrush body" is intended to refer to any portion of the toothbrush body, e.g., the entire toothbrush body including the head portion and the handle portion; the head portion; the handle portion; portions of the head portion; and portions of the handle portion.

In accordance with the present invention, there is provided an apparatus comprising (a) a first mold comprising first and second cavities, each of the cavities defining an article; (b) a first injection unit in fluid communication with said first and second cavities; and (c) a second injection unit also in fluid communication with said first cavity; characterized in that the second injection unit is incapable of being in fluid communication with said second cavity.

Preferably, said first mold further comprises a third cavity defining an article, said third cavity being in fluid communication with said second injection unit.

The apparatus may also include a gating device such that said first and second injection units are in alternate fluid communication with said first cavity.

The first mold may include a fourth cavity defining an article, wherein said apparatus further comprises a third injection unit, said third injection unit being in fluid communication with said third cavity and said fourth cavity.

Preferably, the apparatus includes a gating device such that said second and third injection units are in alternate fluid communication with said third cavity.

In a preferred embodiment of the invention, the first, second and third injection units are capable of substantially simultaneously injecting a first molding compound having a first property into said second cavity, injecting a second molding compound having a second property into said third cavity, and injecting either said first or said second molding compound into said first cavity to form articles having different properties.

The apparatus of the invention may include a second mold comprising a second mold cavity defining an article, a fourth injection unit in fluid communication with said second mold cavity, and an automated mechanical transfer for transferring the article from said second mold cavity to said first cavity of said first mold.

In a particularly preferred embodiment of the invention, the article defined by each of the cavities is a toothbrush body.

The invention permits the manufacture of articles (e.g., toothbrush bodies) having a predetermined variety of properties (e.g., different colors) from a single mold in a single molding cycle. This in turn allows control over the subsequent manufacture and packaging of toothbrushes such that single packages of multiple toothbrushes can be manufactured where each package contains a predetermined multiple of toothbrushes having different properties (e.g., a predetermined number of red, yellow or blue handled toothbrushes in a single package). The invention also permits the selection of a predetermined variety of articles to achieve an array of articles having a variety of properties. The present invention thus avoids the need for manual intervention or assistance in the mixing of toothbrushes to achieve a desired mixture of toothbrushes having different properties in a single package. The apparatus also provides control over the color mixture in each package of toothbrushes shipped to a customer.

The arrangement of the injection units in the molding unit also advantageously permits variation in injection timing which allows molding compounds having differing cure rates to be injected into mold cavities at different times so that cure is completed substantially simultaneously for each molding compound. This allows a single mold cycle to accommodate a variety of molding compounds.

The apparatus of the present invention is also capable of producing an ordered array of toothbrush bodies and maintaining the relative order of the toothbrush bodies throughout the manufacturing process. Maintenance of the ordered array also simultaneously maintains the orientation of the toothbrush bodies, which facilitates tufting and packaging processes.

Other features and advantages of the invention will become apparent from the following description of the preferred embodiments thereof, and from the claims.

### Brief Description of the Drawings

Fig. 1 is a perspective view of a toothbrush body.
Fig. 2 is a schematic view of one embodiment of the toothbrush manufacturing apparatus of the present invention.
Fig. 3 is a cross section view taken along line A-A' of the injection molding unit of the apparatus Fig. 2.
Fig. 4 is a top view of one embodiment of the conveyor of the apparatus of Fig. 2.
Fig. 5 is a side view of the automated mechanical transfer and the conveyors of the apparatus of Fig. 2.
Fig. 6 is a perspective view of one end of another embodiment of the conveyor of Fig. 2.

The invention features an apparatus for the automated manufacture of a plurality of articles. The apparatus is capable of permitting the selective manufacture of a plurality of articles having pre-selected properties in a single molding cycle. The invention also features an apparatus that is capable of simultaneous manufacture of a plurality of articles that differ from each other in at least one property (e.g., color, composition, texture, density, and hardness). The invention is particularly useful for toothbrush manufacturing and is described below with reference to toothbrushes, however, it is to be understood that the invention is applicable to any molded article.

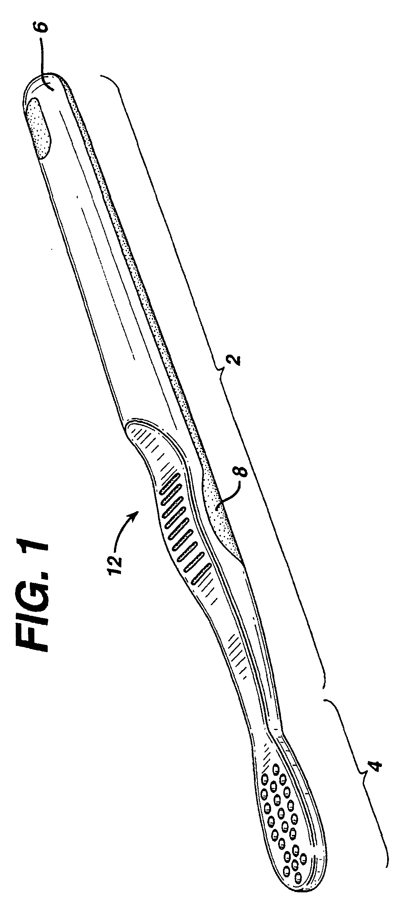

Referring to Fig. 1, toothbrush body 12 includes handle portion 2 and head portion 4. Toothbrush body 12 can further include a base member 6, e.g., a portion made from a relatively harder, more rigid plastic such as polypropylene, and a gripping member 8, e.g., a portion made from a relatively rubbery material such as, e.g., styrene-butadienestyrene triblock copolymer (commercially available under the trade designation Kraton from Shell chemical Co.). Multiple component toothbrush bodies are described, e.g., in U.S. Patent No. 5,256,048 (Jacobs et al.).

The apparatus for manufacturing toothbrushes having toothbrush bodies of different properties will now be described using color as the property that differs. It is intended that the property that differs could be at least one of a variety of properties including, e.g., color, composition, texture, density, hardness, and various combinations thereof.

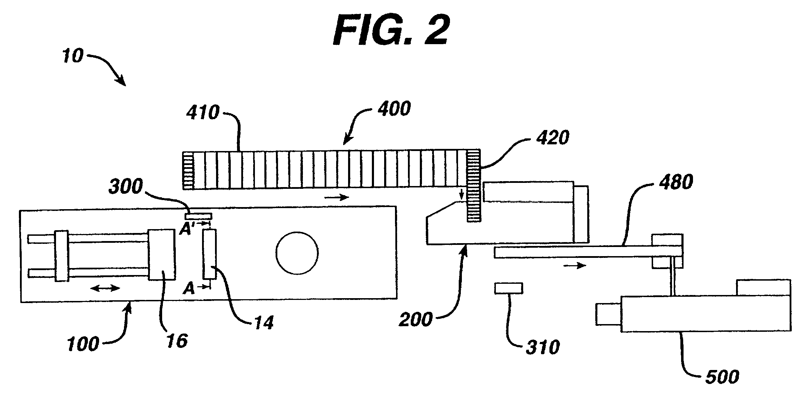

Referring to Fig. 2, toothbrush manufacturing apparatus 10 includes a horizontally mounted injection molding unit 100 that forms toothbrush bodies 12, e.g., the relatively more rubbery gripping portion of a multi-component toothbrush handle. An automated mechanical transfer 300 removes the molded bodies 12 from molding unit 100 and loads them onto conveyor 400, which transports the molded bodies to tufter 200. Tufter 200 secures tufts of bristles to toothbrush body 12 to form the finished toothbrush. A second automated mechanical transfer 310 automatically picks the finished toothbrush and places it on conveyor 480 which moves the toothbrush to packaging unit 500. Packaging unit 500 encases the finished toothbrush in a packaging material, e.g., a blister pack, or a box and cellophane, to form a packaged toothbrush. The packaged toothbrush can then be transported (e.g., by automated transport or conveyor) to a second packaging machine (not shown) where a number individually packaged toothbrushes are packaged together to form a second package.

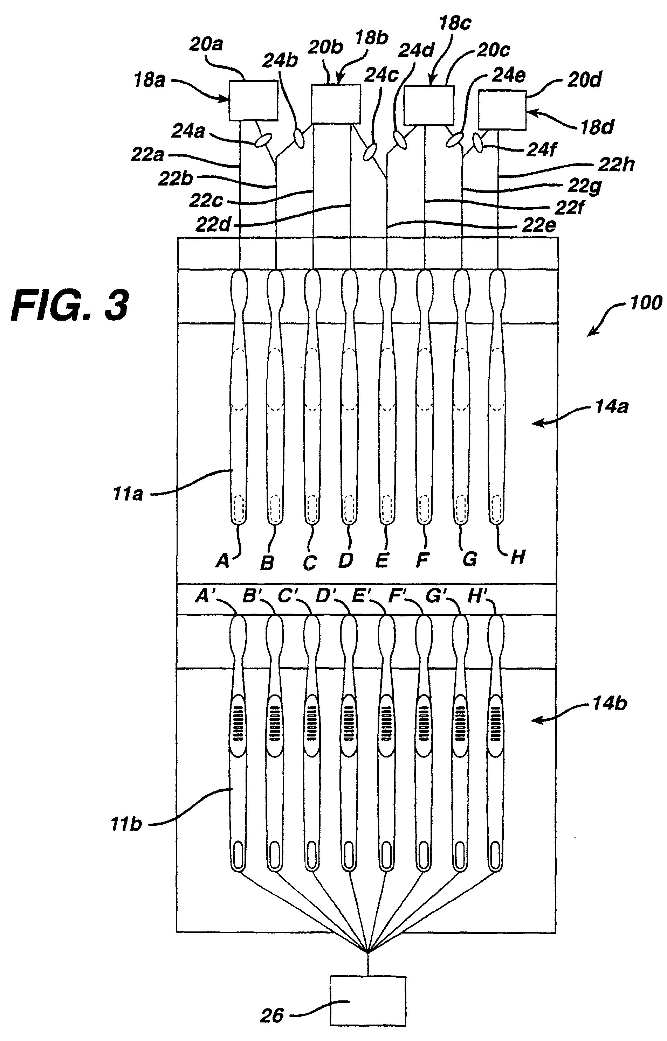

Referring to Figs. 2 and 3, horizontally mounted injection molding unit 100 includes a stationary mold part 14 and a mobile mold part 16. Mobile mold part 16 travels along a horizontal path between a closed position in which mold parts 16, 14 are in sealing contact with each other, and an open position, in which mobile mold part 16 and stationary mold part 14 are separated by a distance to allow automated mechanical transfer 300 access to the formed bodies 12.

In the closed position, mold parts 14 and 16 define a first set 14a of mold cavities A, B, C, D, E, F, G and H, each of which defines a portion 11a of a toothbrush body 12, e.g., the rubberized gripper portion of the toothbrush body. The portion of each mold cavity A-H located on mold part 14 is shown in Fig. 3. The mold cavities can define the entire toothbrush body, i.e., the handle portion and the head portion, or a portion of the toothbrush body.

Molding unit 100 also includes injection units 18a-18d, which are in fluid communication with mold cavities A-H. Injection units 18a-18d are capable of injecting liquid molding compound into mold cavities A-H.

Each injection unit includes a reservoir 20a-20d for holding a molding compound, and conduits 22a-22h through which a molding compound can pass from a reservoir to a mold cavity. Preferably each reservoir contains a molding compound having a different color such that each mold cycle produces toothbrush bodies of different colors; preferably each mold cycle produces at least four differently colored toothbrush bodies, e.g., two blue, two red, two green, and two yellow toothbrush bodies.

Referring to Fig. 3, reservoir 20a of injection unit 18a is connected to cavities A and B via conduits 22a and 22b respectively. Similarly, reservoir 20b is connected to cavities B, C, D and E via conduits 22b-22e respectively. Reservoir 20c is connected to cavities E-G via conduits 22e and 22g, and reservoir 20d is connected to cavities G and H via conduits 22g and 22h respectively. Injection unit 18b shares conduit 22b with injection unit 18a and conduit 22c with injection unit 18c. Injection units 18c and 18d share conduit 22f.

Fluid communication between the injection units and the mold cavities can be controlled by gating manifolds 24a-24f which open and close the fluid communication between reservoirs 20a-20b, and cavities B, E and G. Gating manifolds 24a and 24b, for example, can be placed in an open position or a closed position to regulate the fluid communication between reservoirs 20a and 20b and cavity B. When gating manifold 24a is in an open position, reservoir 20a is in fluid communication with cavity B such that a molding compound in reservoir 24a can travel through conduit 22b to cavity B. When gating manifold 24a is in the open position, manifold 24b can be in the open or closed position to maintain or close communication between reservoir 20b and cavity B. When manifold 24b is in the closed position molding compound is prevented from flowing from reservoir 20b to cavity B.

In an alternate embodiment, a single manifold can be used to open communication between an injection unit and a cavity and simultaneously close communication between another injection unit and the same cavity and vice versa. Referring to cavity B, for example, a single manifold can open communication between injection unit 18a and cavity B and simultaneously close communication between injection unit 18b and cavity B.

Gating manifolds 24a-24f allow a number of toothbrush bodies having a variety of different colors to be manufactured simultaneously. By opening and closing the various manifolds, the number and variety of toothbrush bodies can be altered. In addition, by including injection units having more than one common conduit leading to more than one common cavity, the degrees of freedom, in terms of available color variety, are increased. For example, referring to Fig. 3, the molding compound in reservoir 20b can be transferred to two, three or four cavities depending upon the configuration of gating manifolds 24b and 24c. The molding compound in reservoir 20c can be transferred to one, two or three cavities and the molding compounds in reservoirs 20a and 20d can be transferred to one or two cavities.

Although the molding unit is described as having eight mold cavities and four injection units, it is contemplated that any number of molding cavities and injection units could be placed in fluid communication with each other in various permutations. In addition, gating devices can be positioned as desired to control the flow of molding compound to the cavities.

The injection molding unit can further include a second set 14b of mold cavities A'-H', each of which defines a second portion 11b of toothbrush body 12, e.g., the relatively hard, more rigid plastic (e.g., polypropylene) base portion of the toothbrush body. The second portion 11b of toothbrush body 12 defined by mold cavities A'-H' is different (e.g., in shape, dimension and combinations thereof) from that portion 11a of toothbrush body 12 defined by cavities A-H. Injection unit 26 is in fluid communication with mold cavities A'-H' and is capable of injecting molding compound into mold cavities A'-H' to form second portion 11b of toothbrush body 12. Preferably portion 11b of toothbrush body 12 is formed first and then portion 11b is transferred (e.g., by automated mechanical transfer) to the first set 14a of mold cavities A-H (e.g., portion 11b of toothbrush body formed in cavity A' is transferred to cavity A) where colored molding compound is injected into cavities A-H to form a dual component toothbrush body, and where processing continues as described above.

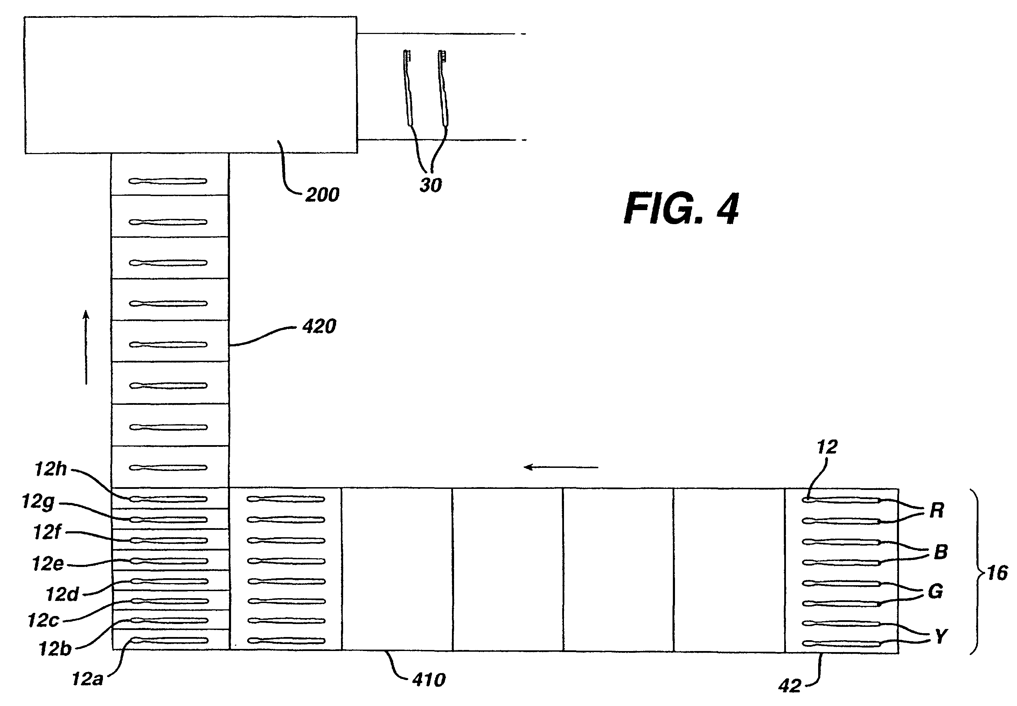

Referring to Figs. 2 and 4, automated mechanical transfer 300 assists in removing toothbrush bodies 12 from the mold cavities (e.g., mold cavities A-H) and transferring toothbrush bodies 12 to conveyor 400. Automated mechanical transfer 300 preferably removes each toothbrush body 12a-12e simultaneously from injection molding unit 100 and transfers the bodies to a first position 42 on conveyor 400. More preferably, automated mechanical transfer 300 simultaneously picks the entire array 16 of toothbrush bodies 12a-12e and places the array 16 onto conveyor 400 in the same order in which the bodies were formed. Automated mechanical transfer 300 is also capable of orienting the individual toothbrush bodies 12, or the entire array 16 of toothbrush bodies 12a-12e, such that the head portions of the toothbrush bodies 12 are in proper orientation for transfer to subsequent operations (e.g., bristle tufting machine 200 or packaging).

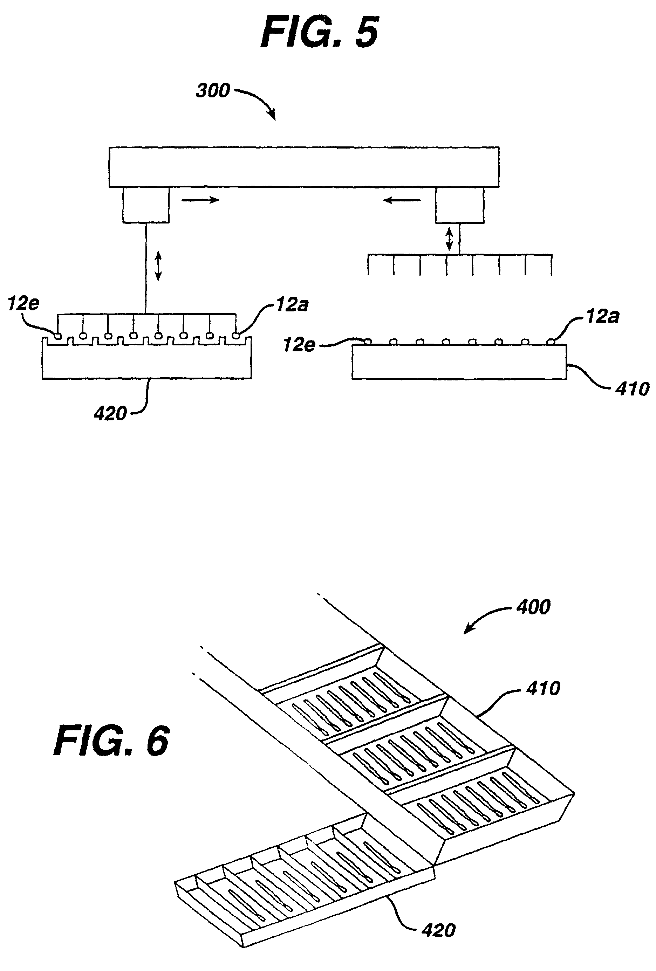

Referring to Figs. 4-6, conveyor 400 includes a first conveyor 410, e.g., a nested cooling conveyor, for receiving and cooling toothbrush bodies 12, and a second conveyor 420, e.g., a walking beam conveyor, for sequentially feeding toothbrush bodies 12 to tufter 200. First conveyor 410 moves toothbrush bodies 12 to second conveyor 420 while maintaining toothbrush bodies 12 in the order in which they were placed onto the conveyor by automated mechanical transfer 300. Toothbrush bodies 12 are then transferred to the second conveyor 420 from first conveyor 410. The transfer from first conveyor 410 to second conveyor 420 can occur in a number of ways including, e.g., first conveyor 410 feeding toothbrush bodies directly onto second conveyor 420 arranged perpendicularly to first conveyor 410, as shown in Fig. 4; automated mechanical transfer 300 picking the toothbrush bodies, e.g., the array 16 of toothbrush bodies 12a-12e, from first conveyor 410 and placing the toothbrush bodies onto second conveyor 420, as shown in Figs. 5 and 6; and combinations thereof. Automated mechanical transfer 300 is capable of orienting the toothbrush bodies throughout the manufacturing process.

Tufter 200, includes a plurality of tuft insertion devices capable of inserting a plurality of tufts of bristles into the head portion of the toothbrush body. Tufter 200 receives an oriented toothbrush body 12, and inserts a plurality of tufts of bristles into the head portion 4 of the toothbrush body 12 to form a finished toothbrush 30. Tufter 200 can also trim the bristles and end rounding the bristle filaments of head portion 4.

Referring to Fig. 2, second automated mechanical transfer 310 automatically picks toothbrushes 30 from tufter 200 and places them on third conveyor 480 where they move to packaging machine 500. Preferably second automated mechanical transfer 310 maintains the orientation and order of the toothbrushes such that control over the color variety is maintained. As a result, the color mixture set at the molding operation can be maintained throughout the toothbrush manufacturing process up to and including the step of packaging the toothbrushes. Packaging machine 500 packages each individual toothbrush into a package (e.g., a blister pack), and can also be configured to package a plurality of toothbrushes into a single package or a plurality of the individually packaged toothbrushes into a second package.

Apparatus 10 can also include a variety of additional processing units including, e.g., a second packaging machine for packaging the individually packaged toothbrushes into a second package such that the second package includes a variety of differently colored individually packaged toothbrushes.

## Claims

1. An apparatus (10) comprising:
(a) a first mold (14a) comprising first (B) and second (A) cavities, each of the cavities defining an article (12);
(b) a first injection unit (18a) in fluid communication with said first (B) and second (A) cavities; and
(c) a second injection unit (18b) also in fluid communication with said first cavity (B); **characterized in that** the second injection unit (18b) is incapable of being in fluid communication with said second cavity (A).

2. The apparatus (10) of claim 1, **characterized in that** said first mold further comprises a third cavity (E) defining an article (12), said third cavity (E) being in fluid communication with said second injection unit (18b).

3. The apparatus (10) of claim 1 or 2, **characterized in that** said apparatus (10) further comprises a gating device (24a, 24b) such that said first (18a) and second (18b) injection units are in alternate fluid communication with said first cavity (B).

4. The apparatus (10) of claim 2 or 3, **characterized in that** said first mold (14a) further comprises a fourth cavity (F,G) defining an article (12), and wherein said apparatus further comprises a third injection unit (18c), said third injection unit (18c) being in fluid communication with said third cavity (E) and said fourth cavity (F,G).

5. The apparatus (10) of claim 4, **characterized in that** said apparatus (10) further comprises a gating device (24c, 24d) such that said second (18b) and third (18c) injection units are in alternate fluid communication with said third cavity (E).

6. The apparatus (10) of any of claims 2-5, **characterized in that** said injection units (18a, 18b, 18c) are capable of substantially simultaneously
injecting a first molding compound having a first property into said second cavity (A),
injecting a second molding compound having a second property into said third cavity (E), and
injecting either said first or said second molding compound into said first cavity (B) to form articles (12) having different properties.

7. The apparatus (10) of any one of claims 4-6, **characterized by** including:
a second mold (14b) comprising a second mold cavity (A'-H') defining an article (12);
a fourth injection unit (26) in fluid communication with said second mold cavity (A'-H'); and
an automated mechanical transfer for transferring the article (12) from said second mold cavity to said first cavity (B) of said first mold (14a).

8. The apparatus (10) of any of the preceding claims, **characterized in that** the article (12) defined by each of the cavities is a toothbrush body (12).

## Patentansprüche

1. Vorrichtung (10), die folgendes umfasst:
(a) eine erste Form (14a), die erste (B) und zweite (A) Hohlräume umfasst, wobei jeder der Hohlräume einen Gegenstand (12) definiert;
(b) eine erste Einspritzeinheit (18a), die sich in Fluidübertragungsverbindung mit den genannten ersten (B) und zweiten (A) Hohlräumen befindet; und
(c) eine zweite Einspritzeinheit (18b), die sich ebenfalls in Fluidübertragungsverbindung mit dem genannten ersten Hohlraum (B) befindet; **dadurch gekennzeichnet, dass** die genannte zweite Einspritzeinheit (18b) keine Fluidübertragungsverbindung mit dem genannten zweiten Hohlraum (A) aufweisen kann.

2. Vorrichtung (10) nach Anspruch 1, **dadurch gekennzeichnet, dass** die genannte erste Form ferner einen dritten Hohlraum (E) umfasst, der einen Gegenstand (12) definiert, wobei sich der genannte dritte Hohlraum (E) in Fluidübertragungsverbindung mit der genannten zweiten Einspritzeinheit (18b) befindet.

3. Vorrichtung (10) nach Anspruch 1 oder 2, **dadurch gekennzeichnet, dass** die genannte Vorrichtung (10) ferner eine Torsteuerungsvorrichtung (24a, 24b) umfasst, so dass sich die genannten ersten (18a) und zweiten (18b) Einspritzeinheiten in wechselnder Fluidübertragungsverbindung mit dem genannten ersten Hohlraum (B) befinden.

4. Vorrichtung (10) nach Anspruch 2 oder 3, **dadurch gekennzeichnet, dass** die genannte erste Form (14a) ferner einen vierten Hohlraum (F, G) umfasst, der einen Gegenstand (12) definiert, und wobei die genannte Vorrichtung ferner eine dritte Einspritzeinheit (18c) umfasst, wobei sich die genannte dritte Einspritzeinheit (18c) in Fluidübertragungsverbindung mit dem genannten dritten Hohlraum (E) und dem genannten vierten Hohlraum (F, G) befindet.

5. Vorrichtung (10) nach Anspruch 4, **dadurch gekennzeichnet, dass** die genannte Vorrichtung (10) ferner eine Torsteuerungseinrichtung (24c, 24d) umfasst, so dass sich die genannten zweiten (18b) und dritten (18c) Einspritzeinheiten in wechselnder Fluidübertragungsverbindung mit dem genannten dritten Hohlraum (E) befinden.

6. Vorrichtung (10) nach einem der Ansprüche 2 bis 5, **dadurch gekennzeichnet, dass** die genannten Einspritzeinheiten (18a, 18b, 18c) im Wesentlichen gleichzeitig zu folgendem in der Lage sind:
Einspritzen einer ersten Formzusammensetzung mit einer ersten Eigenschaft in den genannten zweiten Hohlraum (A);
Einspritzen einer zweiten Formzusammensetzung mit einer zweiten Eigenschaft in den genannten dritten Hohlraum (E);
Einspritzen entweder der genannten erste oder der genannten zweiten Formzusammensetzung in den genannten ersten Hohlraum (B), um Gegenstände (12) mit verschiedenen Eigenschaften zu formen.

7. Vorrichtung (10) nach einem der Ansprüche 4 bis 6, **dadurch gekennzeichnet, dass** die Vorrichtung folgendes aufweist:
eine zweite Form (14b), die einen zweiten Formenhohlraum (A'-H') umfasst, der einen Gegenstand (12) definiert;
eine zweite Einspritzeinheit (26), die sich in Fluidübertragungsverbindung mit dem genannten zweiten Formenhohlraum (A'-H') befindet; und
eine automatisierte mechanische Transfereinrichtung zur Übertragung des Gegenstands (12) aus dem genannten zweiten Formenhohlraum in den genannten ersten Hohlraum (B) der genannten ersten Form (14).

8. Vorrichtung (10) nach einem der vorstehenden Ansprüche, **dadurch gekennzeichnet, dass** es sich bei dem durch jede der Hohlräume definierten Gegenstand (12) um einen Zahnbürstenkörper (12) handelt.

## Revendications

1. Appareil (10) comprenant :
(a) un premier moule (14a) comprenant une première (B) et une deuxième (A) cavités, chaque cavité définissant un article (12) ;
(b) une première unité d'injection (18a) en communication fluide avec lesdites première (B) et deuxième (A) cavités ;
(c) une deuxième unité d'injection (18b) également en communication fluide avec ladite première cavité (B) ;
**caractérisé en ce que** la deuxième unité d'injection (18b) est incapable d'être en communication fluide avec ladite deuxième cavité (A).

2. Appareil (10) selon la revendication 1, **caractérisé en ce que** ledit premier moule comprend en outre une troisième cavité (E) définissant un article (12), ladite troisième cavité (E) étant en communication fluide avec ladite deuxième unité d'injection (18b).

3. Appareil (10) selon la revendication 1 ou 2, **caractérisé en ce que** ledit appareil (10) comprend en outre un dispositif d'entrée (24a, 24b) tel que lesdites première (18a) et deuxième (18b) unités d'injection sont en communication fluide alternée avec ladite première cavité (B).

4. Appareil (10) selon la revendication 2 ou 3, **caractérisé en ce que** ledit premier moule (14a) comprend en outre une quatrième cavité (F, G) définissant un article (12), et dans lequel ledit appareil comprend en outre une troisième unité d'injection (18c), ladite troisième unité d'injection (18c) étant en communication fluide avec ladite troisième cavité (E) et ladite quatrième cavité (F, G).

5. Appareil (10) selon la revendication 4, **caractérisé en ce que** ledit appareil (10) comprend en outre un dispositif d'entré (24c, 24d) tel que lesdites deuxième (18b) et troisième (18c) unités d'injection sont en communication fluide alternée avec ladite troisième cavité (E).

6. Appareil (10) selon l'une quelconque des revendications 2-5, **caractérisé en ce que** lesdites unités d'injection (18a, 18b, 18c) sont capables sensiblement simultanément
d'injecter un premier composé de moulage ayant une première propriété dans ladite deuxième cavité (A),
d'injecter un second composé de moulage ayant une seconde propriété dans ladite troisième cavité (E), et
d'injecter le premier ou le second composé de moulage dans ladite première cavité (B) pour former des articles (12) ayant différentes propriétés.

7. Appareil (10) selon l'une quelconque des revendications 4-6, **caractérisé par** l'inclusion :
d'un second moule (14b) comprenant une seconde cavité de moulage (A'-H') définissant un article (12) ;
une quatrième unité d'injection (26) en communication fluide avec ladite seconde cavité de moulage (A'-H') ; et
un transfert mécanique automatisé afin de transférer l'article (12) depuis ladite deuxième cavité de moule vers ladite première cavité (B) dudit premier moule (14a).

8. Appareil (10) selon l'une quelconque des revendications précédentes, **caractérisé en ce que** l'article (12) défini par chacune des cavités est un corps de brosse à dents (12).
